# DEMANDE DE BREVET EUROPEEN

(11) **EP 0 981 233 A1**
(43) Date de publication de la demande: **23.02.2000**
(21) Numéro de dépôt: 99402015.4
(22) Date de dépôt: 09.08.1999
(51) Int. Cl.: H04L 29/06

(54) **Réseau de téléphonie publique connecté à un système de transport d'informations**

(30) Priorité: 14.08.1998 FR 9810442
(71) Demandeur: SCHLUMBERGER Systèmes, 92120 Montrouge (FR)
(72) Inventeur: Stephan, M. Francois, 75015 Paris (FR)
(74) Mandataire: Lemoyne, Didier

(57) **Abrégé**

Réseau (1) de téléphonie publique utilisant des formats spécifiques d'échange et de représentation d'informations.

Selon l'invention, ledit réseau (1) de téléphonie publique est connecté à un système (2) de transport d'informations utilisant des fonctions standard d'échange et de représentation desdites informations., par l'intermédiaire d'un serveur-relais (3) comprenant un interpréteur (31) apte à convertir lesdites informations desdits formats standard auxdits formats spécifiques, et inversement.

Application à la téléphonie publique.

## Description

La présente invention concerne un réseau de téléphonie publique, destiné à être connecté à un système de transport d'informations.

On connait des systèmes de transport d'informations tels que le World Wide Web, dit Web, qui avec son support de distribution de données, l'Internet, constitue un univers hétérogène et reparti d'informations multimédia accessible par différents réseaux de télécommunication.

Les techniques propres au Web et à l'Internet en font un système de transport d'informations simple, puissant et universel qui est devenu un modèle de référence mondial pour la communication d'informations.

Une multitude de services s'est mise en place à partir du Web et de l'Internet, tels que la fourniture d'informations ciblées (actualités, cours de bourse, horaires, etc.), les opérations bancaires, l'achat de biens matériels ou immatériels à distance, encore appelé commerce électronique, la communication promotionnelle ou la publicité, le courrier électronique, etc..

Sur le Web et l'Internet, les informations, et donc les services, se trouvent sur des ordinateurs appelés serveurs, qui se chargent de répondre aux demandes d'information, dites requêtes, des différents demandeurs, dits ordinateurs-clients, c'est à dire de leur transmettre les informations voulues, et de recevoir de leur part certaines informations, ou données, précisant par exemple les demandes d'information. Ces serveurs peuvent être par exemple des machines dédiées au traitement du courrier électronique, ou bien dédiées à l'information multimédia.

Ce principe de communication, dit client-serveur, est l'un des fondements du Web et de l'Internet. Il assure, en conjonction avec les standards du Web et de l'Internet, le caractère décentralisé et évolutif du système de transport d'informations qu'ils constituent. N'importe qui peut publier de l'information, à condition de mettre en place un serveur, ou d'utiliser un serveur existant, et n'importe qui peut la lire à condition de disposer d'un ordinateur-client. L'Internet relie entre eux tous les ordinateurs-clients et tous les serveurs.

Aujourd'hui, le Web et l'Internet sont accessibles principalement par le biais des ordinateurs personnels, dits PC. La notion d'universalité de l'accès à l'information se traduit par le fait que n'importe qui peut avoir accès à l'information, au sens large, en utilisant n'importe quel type d'ordinateur muni des éléments et logiciels nécessaires. Ainsi, les PC intègrent des éléments, tels que écran, clavier, souris, modems, et divers logiciels, permettant :
- la représentation graphique, et sous forme de texte, des informations,
- l'entrée des données à partir du clavier ou de la souris de l'ordinateur,
- la transmission bi-directionnelle sur le réseau Internet,
- et le parcours, ou encore la navigation, au sein du Web, c'est-à-dire l'accès aux différents serveurs.

Les logiciels des PC comprennent en particulier des protocoles et langages inhérents au Web et à l'Internet et utilisant des formats standard d'échange d'informations, en particulier :
- le protocole IP (Internet Protocol), pour le transport des informations sur le réseau Internet,
- les protocoles de communication POP3, IMAP4, SMTP, pour le courrier électronique,
- le format URL pour les adresses des serveurs et des information,
- le protocole de requête http, pour le dialogue entre les ordinateurs-clients et les serveurs du Web,
- le langage de programmation HTML, pour le format des informations et leur représentation sur le PC, regroupées par fichiers, dits pages HTML.

En particulier, http et HTML intègrent le concept de lien hypertexte, ou encore par extension hypermédia, permettant à l'usager du PC une navigation facile et naturelle au sein du Web et de l'Internet. Ce principe consiste en l'établissement d'un lien direct entre une page HTML et d'autres pages HTML pouvant éventuellement être situées sur d'autres serveurs. Pour se connecter à l'une de ces autres pages HTML, l'usager se contente d'activer la zone de l'écran indiquée, par le biais de la souris par exemple, et le PC adressera alors automatiquement une requête http au serveur correspondant.

La représentation de l'information sur les PC intègre des logiciels qui gèrent une multitude de formats standard multimédia existants, indépendamment du Web et de l'Internet, tels que les formats d'images (GIF, TIFF, JPEG, etc.), les formats sonores (WAV, etc.) et les formats de vidéo (MPEG, etc.). Http et HTML gèrent ces formats existants, et sont conçus pour intégrer les formats à venir.

En outre, http intègre la notion de négociation de format entre l'ordinateur-client et le serveur, permettant de tirer l'avantage maximum des formats compris par l'ordinateur-client et le serveur. La négociation de format consiste en ce qu'un ordinateur-client connecté à un serveur lui communique les formats de représentation qu'il supporte, afin que le serveur lui transmette l'information sous la forme adéquate.

Alors que tous les PC clients comprennent le langage HTML, ils ne comprennent pas l'ensemble de tous les formats de représentation ; la négociation de format permet alors à tous les PC de représenter l'information selon les formats particuliers qu'ils comprennent.

Pour les personnes ne disposant pas d'un PC, on trouve aujourd'hui, dans certains sites publics ou semi-publics des terminaux proposant l'accès total ou partiel à l'Internet. Ces terminaux publics sont en fait constitués de tous les éléments d'un PC, mais assemblées dans un boîtier spécifique adapté à leur usage public.

On connait par ailleurs des réseaux de téléphonie publique dans lesquels les appareils téléphoniques destinés à être utilisés par le public sont installés à cette fin sur des lieux publics, tels que la rue, ou semi-publics, tels que des centres commerciaux, des aéroports, halls d'hôtels, restaurants, magasins, etc.

Les téléphones publics permettent aujourd'hui aux usagers, au moins, et entre autres, d'effectuer des communications téléphoniques, qui sont facturées soit au niveau du téléphone -même, par le biais de pièce de monnaies, de cartes pré-payées, de porte-monnaie électroniques, ou autres moyens, ou facturées de façon différée, par le biais de cartes bancaires ou de cartes d'abonné par exemple. Ces téléphones publics sont des terminaux conçus spécifiquement pour leur utilisation en site public ou semi-public, avec ainsi une spécificité, en particulier sur la contrainte sur le coût et la conception en terme d'éléments constitutifs et de logiciels (microprocesseur, mémoire, etc.), la consommation énergétique, l'ergonomie d'utilisation, les coûts d'opération (en particulier mises à jour, maintenance, etc.).

Une conséquence de cette spécificité réside dans le fait qu'un réseau de téléphonie publique utilise en général des formats spécifiques d'échange et de représentation d'informations. En particulier et à titre d'exemple, l'écran graphique dont disposent certains téléphones publiques ne peut afficher des pages au format standard HTML.

Aussi, le problème technique à résoudre par l'objet de la présente invention est de proposer un réseau de téléphonie publique utilisant des formats spécifiques d'échange et de représentation d'informations, qui permettrait l'accès total ou partiel à un système de transport d'informations, comme l'Internet et le Web, à partir de téléphones publics, comme une alternative intéressante à l'installation de terminaux publics constitués des éléments des PC, obtenant de cette façon un accès au Web, à l'Internet et aux services, adapté aux sites publics et semi-publics grâce à la spécificité des téléphones publics, et en conservent en avantages des réseaux de téléphonie publique concernant la maintenance et l'ergonomie.

La solution au problème technique posé consiste, selon la présente invention, en ce que ledit réseau de téléphonie publique est connecté à un système de transport d'informations utilisant des formats standard d'échange et de représentation desdites informations par l'intermédiaire d'un serveur relais comprenant un interpréteur apte à convertir lesdites informations desdits formats spécifiques auxdits formats standard, et inversement.

Aussi, comme on le verra plus en détail dans la suite de ce mémoire, l'invention apporte une solution au problème de l'incompatibilité a priori entre les différents formats utilisés par le réseau de téléphonie publique, d'une part, et le système de transport d'informations, l'Internet et le Web, d'autre part, avec pour conséquence avantageuse le maintien des spécificités de la téléphonie publique, bien adaptés à l'usage public.

La description qui va suivre au regard du dessin annexé, donné à titre d'exemple non limitatif, fera bien comprendre en quoi consiste l'invention et comment elle peut être réalisée.

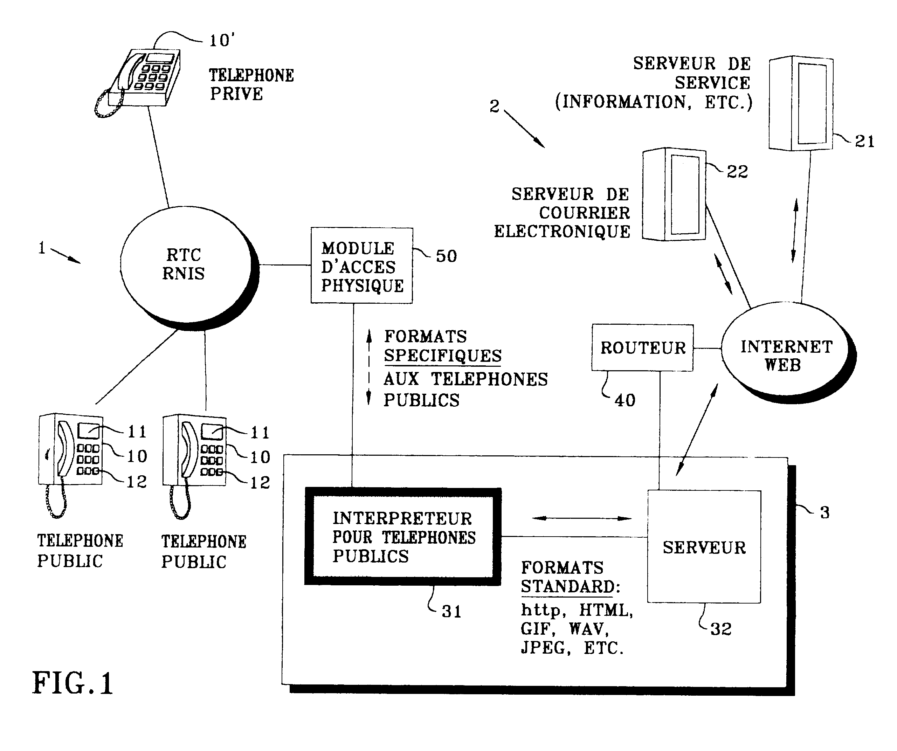

La figure 1 est un schéma d'un réseau de téléphonie publique conforme à l'invention.

Sur la figure 1 est représenté un réseau 1 de téléphonie publique constitué d'une pluralité de téléphones publics 10 communiquant entre eux à travers, par exemple, le réseau public commuté (RTC) ou un réseau numérique à intégration de services (RNIS).

Chaque téléphone public 10 comprend un certain nombre d'éléments particuliers, inhérents à un téléphone public, en particulier pour l'ergonomie. On trouve notamment des organes d'entrée et de lecture des données, comme un écran 11 et un clavier 12 à touches. D'autre part, le téléphone 10 met en oeuvre de logiciels permettant d'échanger et de représenter les informations selon des formats spécifiques mieux adaptés à son ergonomie, bien que fonctionnant selon les principes des liens hypermédia.

Le réseau 1 de téléphonie publique est destiné à être connecté à un système 2 de transport d'informations utilisant des formats standard d'échange et de représentation des sites informations. Comme illustré sur la figure 1 , ce système 2 peut être le Web et l'Internet avec son ensemble de serveurs, serveurs 21 d'information et serveurs 22 de courrier électronique en particulier.

Ainsi que le montre la figure 1, le réseau 1 de téléphonie publique est connecté au réseau 2 de transport d'informations par l'intermédiaire d'un serveur-relais 3 comprenant, d'une part, un interpréteur 31 qui est un logiciel apte, notamment, à convertir les informations des formats spécifiques en réseau aux formats standard du système 2, et inversement, et d'autre part, un serveur 32 permettant de communiquer directement avec les serveurs 21, 22 du Web et de l'Internet par l'intermédiaire d'un routeur 40. La liaison entre le réseau 1 de téléphonie publique et le serveur-relais 3 se fait par des modules 50 d'accès physique connectés sur le réseau RTC ou RNIS.

Les fonctions principales de l'interpréteur sont les suivantes :
- reconnaître le type de téléphone public 10, et donc les formats spécifiques à utiliser, tels qu'ils lui sont indiqués par le téléphone public, mettant ainsi en oeuvre le principe de négociation de format,
- convertir les informations contenues dans des pages HTML, ou toute information de tout format standard existant d'échange et de représentation, y compris de stockage d'information (en particulier des bases de données), aux formats spécifiques de représentation adaptés à chaque type de téléphone public, formats pouvant être particuliers à chaque type,
- convertir les requêtes émises entre le téléphone public 10 et les serveurs 21 d'information ou de service, et les serveurs 22 de courrier électronique, à la suite d'actions ou d'entrée de données des usagers, et pouvant être un format spécifique à chaque type de téléphone public, en des requêtes http, ou sous tout format standar de requêtes,
- assurer le transport des informations entre le téléphone public 10 et le serveur-relais 3 et donc avec aussi les serveurs 21, 22 du Web et de l'Internet.

L'interpréteur 31 est ainsi adapté à chaque type de téléphone public 10, chaque type de téléphone public (déterminé paer le type d'ergonomie par exemple : caractéristiques de l'écran, du clavier, etc.) pouvant correspondre à une configuration, ou version, de l'interpréteur.

Dans le cas où un utilisateur connecte au téléphone public 10 un PC, portable par exemple, afin d'avoir accès au Web et à l'Internet, ou à des services, à partir de son PC, le serveur-relais 3 est alors informé par le téléphone public 10 de cette situation, et transmet alors l'information au PC, via le téléphone public, de façon transparente sans activer l'interpréteur 31.

En conclusion, l'invention présente les avantages suivants :
- elle permet de continuer à tenir compte de la spécificité des téléphones publics, en optimisant ainsi leur conception et par conséquent en réduisant leur coût, n'y incluant que les éléments qui doivent nécessairement s'y trouver,
- elle permet d'obtenir la meilleure ergonomie possible au niveau du téléphone public, différentes a priori de l'ergonomie des PC qui est souvent décourageante pour le public dans les lieux publics ou semi-publics, en ajoutant aux services disponibles de la valeur, correspondant à l'accès au service à partir des téléphones publics, permettant par la-même un accès encore plus universel à l'information, dans l'esprit du Web et de l'Internet, et permettant ainsi à l'opérateur de téléphones public de proposer aux usagers des services à valeur ajoutée,
- elle permet à l'opérateur de téléphones publics de rendre l'accès aux services indépendamment de leur format à la source, ces services étant conçus pour être accessibles par le biais de différents terminaux, dont les téléphones publics ne sont qu'un sous-ensemble. Ainsi, elle permet de minimiser les coûts afférents à une évolution des capacités de ressource des téléphones publics (par exemple en ergonomie, notammet format d'écran), le suivi de ces évolutions se traduisant par une mise à jour dans le serveur-relais et non pas au niveau de tous les serveurs contenant les services,
- elle permet à l'opérateur de téléphones publics de suivre le plus rapidement, et au plus bas coût possible, les évolutions constantes des standards du Web et de l'Internet et des formats multimédias, le suivi de ces évolutions se traduisant par une mise à jour au niveau de l'interpréteur, situé sur le serveur-relais et non pas sur chaque téléphone public,
- elle permet d'obtenir l'interopérabilité du parc de téléphones publics au Web et à l'Internet, et donc aux informations et aux services, au niveau d'un serveur-relais et non pas au niveau de chaque téléphone public, ce qui serait plus coûteux et plus lent à assurer,
- elle prolonge le principe client-serveur, et le principe de négociation de format, inhérents au Web, en les déclinant de façon optimale pour l'accès au Web et à l'Internet par les téléphones publics.

## Revendications

1. Réseau (1) de téléphonie publique utilisant des formats spécifiques d'échange et de représentation d'informations, caractérisé en ce que ledit réseau (1) de téléphonie publique est connecté à un système (2) de transport d'informations utilisant des fonctions standard d'échange et de représentation desdites informations., par l'intermédiaire d'un serveur-relais (3) comprenant un interpréteur (31) apte à convertir lesdites informations desdits formats standard auxdits formats spécifiques, et inversement.

2. Réseau selon la revendication 1, caractérisé en ce que ledit serveur-relais (3) est apte à désactiver l'interpréteur (31) lorsqu'une machine utilisant les formats standard est connectée sur ledit réseau (1).
